# EUROPEAN PATENT APPLICATION

(11) **EP 3 860 168 A1**
(43) Date of publication of application: **04.08.2021**
(21) Application number: 21153780.8
(22) Date of filing: 27.01.2021
(51) Int. Cl.: H04W 4/30

(54) **MOBILE TOUR BROADCASTING SYSTEM AND METHOD OF USE**

(30) Priority: 28.01.2020 US 202016774759
(71) Applicant: Burton, Brent, Arlington, TX 76107 (US)
(72) Inventor: Burton, Brent, Arlington, TX 76107 (US)
(74) Representative: Lecomte & Partners

(57) **Abstract**

A mobile tour broadcasting system allows a participant to connect to a tour network that is able to move about with a tour group. The network could be associated with a tour guide so that as the group moves or progresses the network enables the participants receive and to continue to receive a tour feed. The feed could include video, audio, images or other forms of media.

## Description

### 1. Field of the Invention

The present invention relates generally to data systems and more specifically, to a mobile tour broadcasting system for providing related to local areas, attractions, historic event or the like directly to a user.

### 2. Description of Related Art

Data systems are well known in the art and are effective means transport information from one party to another. The information could be sent in physical form or electronic. With regards to tour data, it is commonly, conveyed through signs, audio recordings and videos. For example, a person at a museum rents an audio player that repeats a message when activated by the person. Commonly, this is accomplished by button push, location or code. Similar systems are used on tour buses that drive around a city or location.

One of the problems commonly associated with common data systems related to tours are their limited efficiency. For example, the equipment must be rented, used and cared for. Often it is not returned after use. Additionally, concerns about hygiene prevent some for using these devices. Attempts to alleviated these issues have resulted in streaming the content to the person's device and throughput limitations have hindered these attempts.

Accordingly, although great strides have been made in the area of data systems related to tours, many shortcomings remain.

### DESCRIPTION OF THE DRAWINGS

The novel features believed characteristic of the embodiments of the present application are set forth in the appended claims. However, the embodiments themselves, as well as a preferred mode of use, and further objectives and advantages thereof, will best be understood by reference to the following detailed description when read in conjunction with the accompanying drawings, wherein:
FIG. 1 is a diagram of a mobile tour broadcasting system in accordance with a preferred embodiment of the present application;
FIG. 2 is a diagram of the digital environment that supports the system of FIG. 1;
FIG. 3 is a diagram of the data server of FIG. 1;
FIG. 4 is a diagram of the network of FIG. 1; and
FIG. 5 is a flowchart of a method of providing tour data to a user.

While the system and method of use of the present application is susceptible to various modifications and alternative forms, specific embodiments thereof have been shown by way of example in the drawings and are herein described in detail. It should be understood, however, that the description herein of specific embodiments is not intended to limit the invention to the particular embodiment disclosed, but on the contrary, the intention is to cover all modifications, equivalents, and alternatives falling within the spirit and scope of the present application as defined by the appended claims.

### DETAILED DESCRIPTION OF THE PREFERRED EMBODIMENT

Illustrative embodiments of the system and method of use of the present application are provided below. It will of course be appreciated that in the development of any actual embodiment, numerous implementation-specific decisions will be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The system and method of use in accordance with the present application overcomes one or more of the above-discussed problems commonly associated with conventional data systems. Specifically, the present invention provides means of providing data relevant to a tour, location, event or the like directly to a participant. These and other unique features of the system and method of use are discussed below and illustrated in the accompanying drawings.

The system and method of use will be understood, both as to its structure and operation, from the accompanying drawings, taken in conjunction with the accompanying description. Several embodiments of the system are presented herein. It should be understood that various components, parts, and features of the different embodiments may be combined together and/or interchanged with one another, all of which are within the scope of the present application, even though not all variations and particular embodiments are shown in the drawings. It should also be understood that the mixing and matching of features, elements, and/or functions between various embodiments is expressly contemplated herein so that one of ordinary skill in the art would appreciate from this disclosure that the features, elements, and/or functions of one embodiment may be incorporated into another embodiment as appropriate, unless described otherwise.

The preferred embodiment herein described is not intended to be exhaustive or to limit the invention to the precise form disclosed. It is chosen and described to explain the principles of the invention and its application and practical use to enable others skilled in the art to follow its teachings.

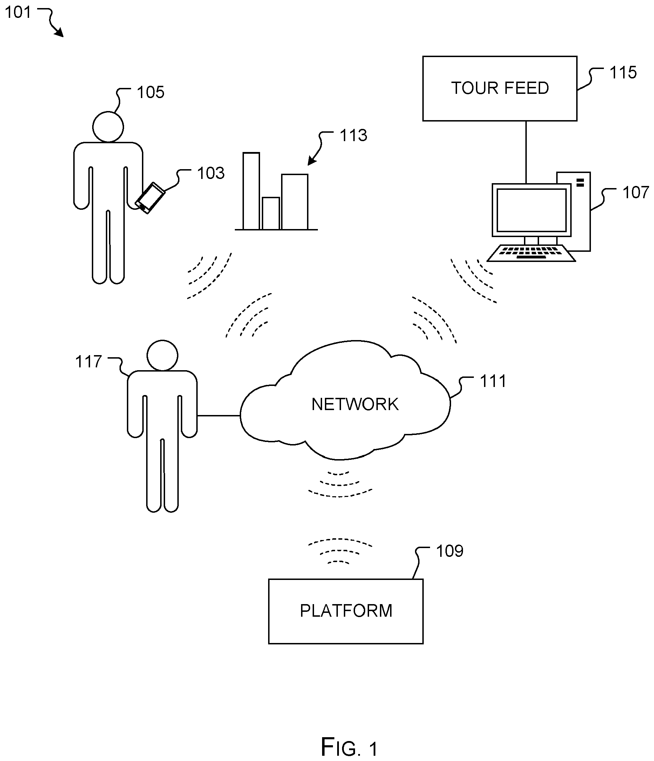

Referring now to the drawings wherein like reference characters identify corresponding or similar elements throughout the several views, FIG. 1 depicts a diagram of the system and method of use in accordance with the preferred embodiment of the present invention. It should be understood that the embodiments discussed herein are substantially similar in form and function and share one or more of the features discussed in each embodiment although the features may not be shown specifically with reference to the particular embodiment.

The present invention is directed to a mobile tour broadcasting system as shown in FIG. 1. In the preferred embodiment, the broadcasting system discussed herein could be utilized within a guided tour; however, it should be appreciated that the broadcasting system could be utilized with other informational exchange systems such as mobile group games, tour busses and the like and should not be narrowly tailored in scope and protection to merely guided tours.

Broadcast system 101 includes a personal communications device 103 operated by a user 105 in electronic communication with a platform 109 via network 111. A data server 107 is also in electronic communication with the platform 109 via the network 111 and provides a tour feed therethrough. The tour feed 115 provides data related to a thing 113 such as a city, museum, event or the like. It is contemplated that the network 111 or a portion thereof is physically associated with a guide 117. This association could be that they are in the same vehicle or it is carried by the guide 117.

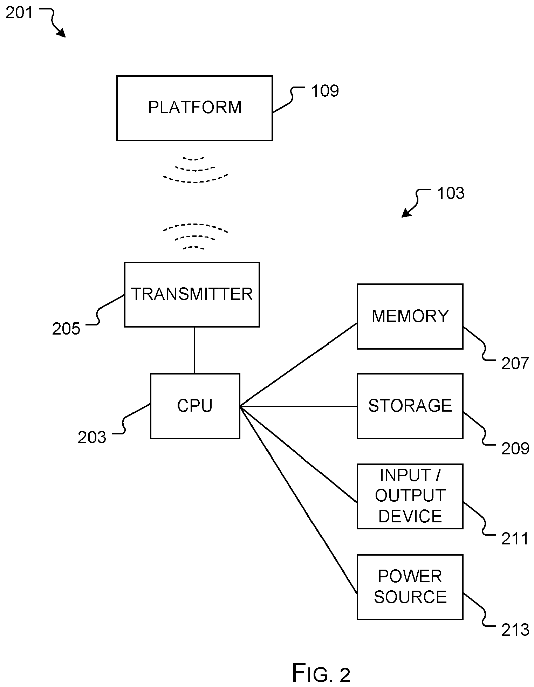

A digital environment is created by the personal communications device 103, platform 109, data sever 107 and network 111 as further depicted by FIG. 2. The digital environment 201 further includes a CPU 203, with a transmitter, 205, memory, storage, input/output devices 211 and power source 213. In this embodiment an example of an output device is a speaker or headphones to convey sound to the user.

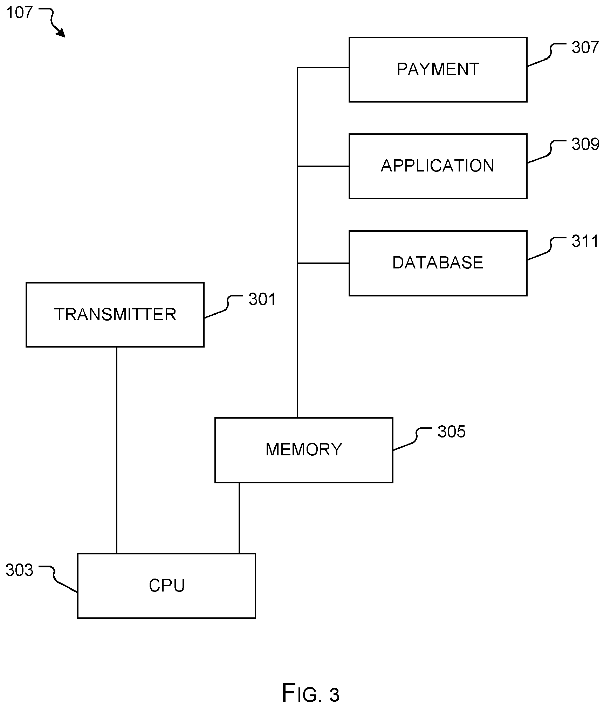

Referring now to FIG. 3 the data server 107 is depicted and includes a CPU 303 with a transmitter 301 and memory 305. While these components are listed, others could be used or implemented and these are provided as an example only. The data server is contemplated to enable payment 307, applications 309 databases 311 or tour feeds 115 and the like.

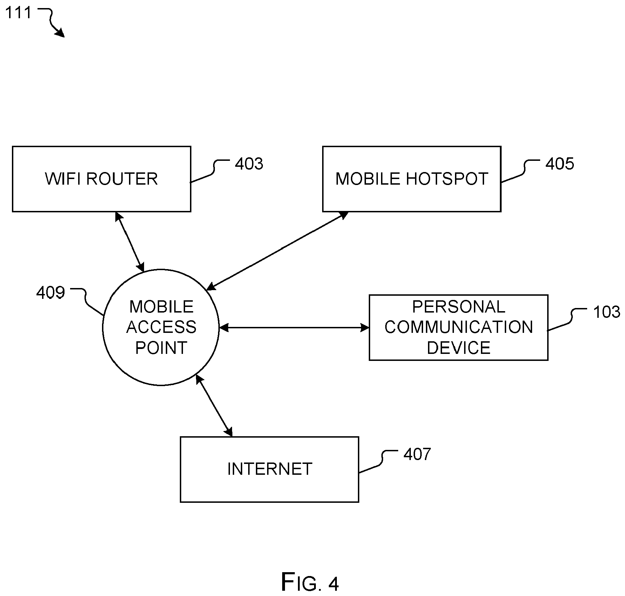

The network 111 is further depicted by FIG. 4 and includes a mobile access point 409 configured to communicated directly with the personal communication device 103. The mobile access point could be a Wi-Fi router 403, mobile hotspot 405 or the like and is contemplated to facilitate the communication of the tour feeds 115 to the personal communication device 103. It is further contemplated that the internet 407 or another network adaptor or outlet could connect to the mobile access point 409.

It should be appreciated that some of the unique features believed characteristic of the present application is that the broadcasting system 101 provides one or more of the following features: (1) customizable tour guide system, (2) high-quality tour experience, (3) mobile local network connection for seamless and clear communication, (4) Reduce asset investment and replacement cost from damaged or headphone equipment, (5) enables dynamic tour group sizes and (6) a business management portal.

It is contemplated that the system 101 could include embodiments of the data server 107 configured to run Linux software and facilitate traffic on the network. It is contemplated that this Linux computing device could fulfill the roles of an audio streaming web server and a media sharing web server.

In use, the user 105 arrives at a designated location and connects their personal communications device 103 to the tour network 111. The personal communications device 103 is used a tour feed 115 that could include audio or other data from a guide. As a tour group moves from place to place the network 111 moves with the guide and allows the group to remain in constant communication during the whole of the tour.

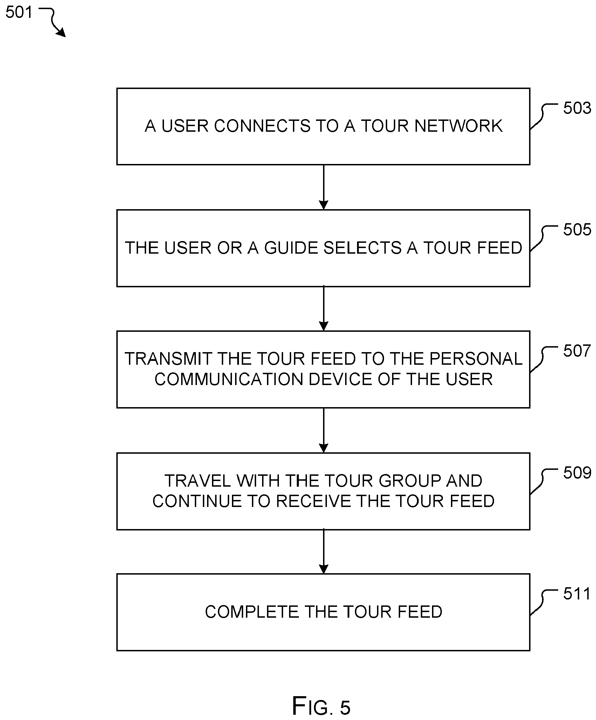

A method of providing a tour feed to a user is depicted by FIG. 5. Method 501 includes a user connecting to a tour network 503, the user or a guide selecting a tour feed 505, transmitting the tour feed to the personal communication device of the user 507, traveling with the tour group and continuing to receive the tour feed 509 and completing the tour feed 511.

The particular embodiments disclosed above are illustrative only, as the embodiments may be modified and practiced in different but equivalent manners apparent to those skilled in the art having the benefit of the teachings herein. It is therefore evident that the particular embodiments disclosed above may be altered or modified, and all such variations are considered within the scope and spirit of the application. Accordingly, the protection sought herein is as set forth in the description. Although the present embodiments are shown above, they are not limited to just these embodiments, but are amenable to various changes and modifications without departing from the spirit thereof.

## Claims

1. A mobile tour broadcasting system (101), comprising:
a personal communication device (103);
a network (111);
a platform (109); and
a data server (107);
wherein the data server (107) enables the streaming of a tour feed;
wherein the personal communication device (103) is in electronic communication with the platform (109) through the network (111);
wherein the data server (107) is in electronic communication with the platform (109) through the network (111);
wherein the tour feed is selected by or transmitted to the personal communication device (103).

2. The system (101) of claim 1 wherein the network (111) is conveyed or otherwise associated with a guide.

3. A mobile tour broadcasting system (101) comprising;
a data server (107) providing a tour stream to a personal communication device (103) withing a digital environment created by the data server, personal communication device (103), a network (111) and their respective components.

4. A method (501) of providing a tour feed to a user, comprising: a user
connecting to a tour network (503);
the user or a guide selecting a tour feed (505);
transmitting the tour feed to the personal communication device of the user (507);
traveling with the tour group and continuing to receive the tour feed (509); and completing the tour feed (511).
